(19) Europäisches Patentamt
European Patent Office
Office européen des brevets

(11) **EP 4 716 350 A1**

(12) **EUROPEAN PATENT APPLICATION**
published in accordance with Art. 153(4) EPC

(43) Date of publication:
**25.03.2026  Bulletin 2026/13**

(21) Application number: **24806532.8**

(22) Date of filing: **13.05.2024**

(51) International Patent Classification (IPC):
*H04W 74/00* (2009.01)

(52) Cooperative Patent Classification (CPC):
**H04L 1/06; H04L 1/1812; H04L 5/00; H04W 74/00; H04W 74/08**

(86) International application number:
**PCT/CN2024/092777**

(87) International publication number:
**WO 2024/235180 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **15.05.2023  CN 202310547636**

(71) Applicant: **Vivo Mobile Communication Co., Ltd. Dongguan, Guangdong 523863 (CN)**

(72) Inventors:
• **WANG, Yong**
  **Dongguan, Guangdong 523863 (CN)**
• **LIN, Zhipeng**
  **Dongguan, Guangdong 523863 (CN)**

(74) Representative: **Shieldmark**
**P.O. Box 90471**
**2509 LL The Hague (NL)**

(54)    **CHANNEL MONITORING OR RECEIVING METHOD AND DEVICE AND TERMINAL**

(57)    Disclosed are a method and apparatus for channel monitoring or receiving, and a terminal, which belong to the technical field of communication. The method for channel monitoring or receiving in embodiments of the present disclosure includes monitoring or receiving, by a terminal, a first channel based on a target reference signal in a process of random access channel-less (RACH-less) handover of the terminal. A demodulation reference signal (DMRS) antenna port of the first channel and the target reference signal are quasi co-located (QCL). The first channel includes at least one of the following: an RACH-less physical downlink control channel (PDCCH); and an RACH-less physical downlink shared channel (PDSCH).

Monitor or receive, by a terminal, a first channel based on a target reference signal in a process of random access channel-less (RACH-less) handover of the terminal, where a demodulation reference signal (DMRS) antenna port of the first channel and the target reference signal are quasi co-located (QCL), and the first channel includes at least one of the following: an RACH-less physical downlink control channel (PDCCH); and an RACH-less physical downlink shared channel (PDSCH)   201

FIG. 2

EP 4 716 350 A1

**Description**

**CROSS-REFERENCE TO RELATED APPLICATIONS**

The present disclosure claims the priority to Chinese Patent Application No. 202310547636.7 filed in China on May 15, 2023, which is incorporated herein by reference in its entirety.

**TECHNICAL FIELD**

The present disclosure belongs to the technical field of communication, and specifically relates to a method and apparatus for channel monitoring or receiving, and a terminal.

**BACKGROUND**

In a transmission process of long term evolution (Long Term Evolution, LTE) random access channel-less (RACH-less), association relationships between beams (beam) of uplink and downlink channels and a known signal, and between a demodulation reference signal (Demodulation Reference Signal, DMRS) antenna port (antenna port) and a known signal do not need to be considered. Transmission of an RACH-less physical uplink shared channel (Physical Uplink Shared Channel, PUSCH) should be supported in new radio (New Radio, NR). There is no random access channel (Random Access Channel, RACH) transmission in a target cell (target cell) and the corresponding reference signal selection, causing low reliability of downlink control and data channels. This leads to a low success rate of RACH-less handover.

Thus, how to improve a success rate of RACH-less handover is an urgent problem to be solved.

**SUMMARY**

Embodiments of the present disclosure provide a method and apparatus for channel monitoring or receiving, and a terminal, which can solve a problem of how to improve a success rate of random access channel-less (RACH-less) handover.

A first aspect provides a method for channel monitoring or receiving. The method is executed by a terminal and includes:

monitoring or receiving, by a terminal, a first channel based on a target reference signal in a process of random access channel-less (RACH-less) handover of the terminal. A demodulation reference signal (DMRS) antenna port of the first channel and the target reference signal are quasi co-located (Quasi co-location, QCL).

The first channel includes at least one of the following:

an RACH-less physical downlink control channel (Physical Downlink Control Channel, PDCCH); and
an RACH-less physical downlink shared channel (Physical Downlink Shared Channel, PDSCH).

A second aspect provides an apparatus for channel monitoring or receiving. The apparatus includes:
a monitoring or receiving module configured to monitor or receive a first channel based on a target reference signal in a process of random access channel-less (RACH-less) handover of a terminal. A demodulation reference signal (DMRS) antenna port of the first channel and the target reference signal are quasi co-located (QCL).

The first channel includes at least one of the following:

an RACH-less physical downlink control channel (PDCCH); and
an RACH-less physical downlink shared channel (PDSCH).

A third aspect provides a terminal. The terminal includes a processor and a memory. The memory stores a program or an instruction runnable on the processor. When the program or the instruction is executed by the processor, steps of the method for channel monitoring or receiving according to the first aspect are implemented.

A fourth aspect provides a terminal. The terminal includes a processor and a communication interface. The processor is configured to monitor a first channel based on a target reference signal in a process of random access channel-less (RACH-less) handover of the terminal. A demodulation reference signal (DMRS) antenna port of the first channel and the target reference signal are quasi co-located (QCL). The first channel includes at least one of the following: an RACH-less physical downlink control channel (PDCCH); and an RACH-less physical downlink shared channel (PDSCH). The communication interface is configured to receive the first channel based on the target reference signal in the process of RACH-less handover of the terminal. The DMRS antenna port of the first channel and the target reference signal are quasi co-located (QCL). The first channel includes at least one of the following: the RACH-less PDCCH; and the RACH-less PDSCH.

A fifth aspect provides a readable storage medium. The readable storage medium stores a program or an instruction. When the program or the instruction is executed by a processor, steps of the method for channel monitoring or receiving according to the first aspect are implemented.

A sixth aspect provides a chip. The chip includes a processor and a communication interface. The communication interface is coupled to the processor. The processor is configured to run a program or an instruction, such that steps of the method for channel monitoring or receiving according to the first aspect are implemented.

A seventh aspect provides a computer program/program product. The computer program/program product is stored in a storage medium. The computer program/program product is executed by at least one processor, such that steps of the method for channel monitoring or receiving according to the first aspect are implemented.

In the embodiment of the present disclosure, the DMRS antenna port of the first channel and the target reference signal are quasi co-located (QCL). The first channel includes at least one of the RACH-less PDCCH or the RACH-less PDSCH. In the process of RACH-less handover of the terminal, the terminal may determine a transmission characteristic of the first channel in the QCL relationship based on the target reference signal, and then the terminal may monitor or receive the PDCCH and the PDSCH based on the transmission characteristic. In this way, improvement in reliability of downlink control and a data channel is facilitated, and a success rate of the RACH-less handover is improved.

**BRIEF DESCRIPTION OF THE DRAWINGS**

FIG. 1 is a block diagram of a radio communication system applied to an embodiment of the present disclosure;

FIG. 2 is a schematic flowchart of a method for channel monitoring or receiving according to an embodiment of the present disclosure;

FIG. 3 is a schematic structural diagram of an apparatus for channel monitoring or receiving according to an embodiment of the present disclosure;

FIG. 4 is a first schematic diagram of a hardware structure of a terminal according to an embodiment of the present disclosure; and

FIG. 5 is a second schematic diagram of a hardware structure of a terminal according to an embodiment of the present disclosure.

**DETAILED DESCRIPTION**

Technical solutions in embodiments of the present disclosure will be clearly described below with reference to accompanying drawings in the embodiments of the present disclosure. Obviously, the embodiments described are some embodiments rather than all embodiments of the present disclosure. Based on the embodiments of the present disclosure, all other embodiments obtained by those of ordinary skill in the art should fall within the protection scope of the present disclosure.

The terms such as "first" and "second" in the present disclosure are used for distinguishing between similar objects and are not intended to describe a specific order or sequence. It should be understood that terms used in this way can be interchanged under appropriate circumstances, such that the embodiments of the present disclosure can be implemented in an order other than orders illustrated or described herein. In addition, the objects distinguished by "first" or "second" are generally objects of an identical type, and a quantity of objects is not limited. For example, a quantity of first objects may be one or more. In addition, "or" in the present disclosure indicates at least one of connected objects. For example, "A or B" covers three solutions, that is, solution one including A and excluding B; solution two including B and excluding A; and solution three including A and B. The character "/" generally indicates an "or" relationship between two associated context objects.

The term "indication" in the description may be one direct indication (or an explicit indication) or one indirect indication (or an implicit indication). The direct indication may be understood as that a sender clearly informs a receiver of specific information, a to-be-executed operation or a request result in the sent indication. The indirect indication may be understood as that a receiver determines corresponding information according to an indication sent by a sender, or performs determination and determines a to-be-executed operation or a request result according to a determination result.

It is worth pointing out that the technology described in the embodiments of the present disclosure is not limited to a long term evolution (Long Term Evolution, LTE)/LTE-advanced (LTE-Advanced, LTE-A) system, and may alternatively be used in other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present disclosure are generally used interchangeably, and the described technology can be applied to the systems and radio technologies described above, or other systems and radio technologies. The following description describes a new radio (New Radio, NR) system for illustration. NR terms are used in most of the following description, and the technologies can be applied to systems other than the NR system, such as a 6th generation (6th Generation, 6G) communication system.

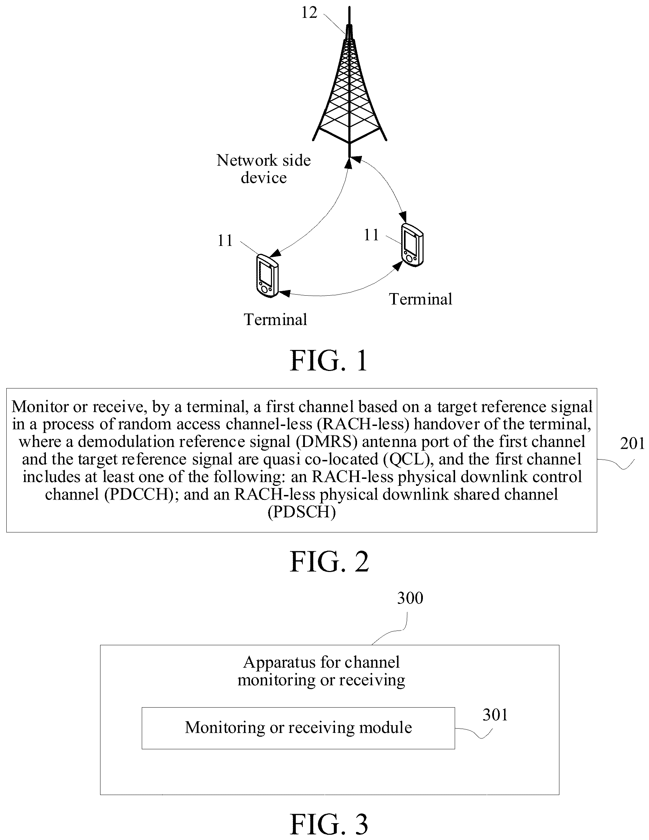

FIG. 1 is a block diagram of a radio communication system applied to an embodiment of the present disclosure. The radio communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), a smart home appliance (home equipment having a radio communication function, such as a refrigerator, a television, a washing machine or furniture), and terminal side devices such as a game machine, a personal computer (Personal Computer, PC), a teller machine or a self-service machine. The wearable device includes a smart watch, a smart band, a smart headset, smart glasses, smart jewelry (a smart bracelet, a smart chain bracelet, a smart ring, a smart necklace, a smart anklet, a smart ankle chain, etc.), a smart wrist strap, a smart garment, etc. The vehicle user equipment may alternatively be referred to as an in-vehicle terminal, an in-vehicle controller, an in-vehicle module, an in-vehicle component, an in-vehicle chip, an in-vehicle unit, etc. It should be noted that a specific type of the terminal 11 is not limited by the embodiment of the present disclosure. The network side device 12 may include an access network device or a core network device. The access network device may alternatively be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, etc. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or any other suitable term in the art, as long as identical technical effects are achieved. The base station is not limited to a particular technical vocabulary. It should be noted that, in the embodiment of the present disclosure, only the base station in the NR system is introduced as an example, and a specific type of the base station is not limited.

The method for channel monitoring or receiving according to the embodiments of the present disclosure will be described in detail below through some embodiments and their application scenes with reference to the accompanying drawings.

First, it should be noted that, the method for channel monitoring or receiving according to the embodiment of the present disclosure may be applied to a scene of a non-terrestrial network (Non-terrestrial Network, NTN), or a scene of terrestrial network (Terrestrial Network, TN) communication, which is not limited by the present disclosure.

The NTN will be introduced below:

According to orbit altitudes, satellite types considered in the NTN mainly include a geosynchronous earth orbit (Geosynchronous Earth Orbit, GEO) satellite, a medium earth orbit (Medium Earth Orbit, MEO) satellite, and a low earth orbit (Low Earth Orbit, LEO) satellite. According to whether a base station is on a satellite, networks may be classified into two NTN types of regenerative payload (regenerative payload) and transparent payload (transparent payload). The two aspects are main factors used for determining a delay in the NTN. The following table 1 describes delay sizes in GEO and LEO networks.

Table 1

| NTN scene | A | B | C1 | C2 | D1 | D2 |
|---|---|---|---|---|---|---|
|  | GEO regenerative payload | GEO transparent payload | LEO transparent payload | | LEO regenerative payload | |
| Satellite altitude | 35786 km | | 600 km | | | |
| Relative velocity of a satellite relative to the earth | Negligible | | 7.56 km per second | | | |

(continued)

| NTN scene | A | B | C1 | C2 | D1 | D2 |
|---|---|---|---|---|---|---|
| | GEO regenerative payload | GEO transparent payload | LEO transparent payload | | LEO regenerative payload | |
| Minimum elevations of a feeder link and a service link | Service link 10°, and feeder link 10° | | | | | |
| Typical minimum/maximum NTN beam footprint diameter | 100 km/3500 km | | 50 km/1000 km | | | |
| Maximum propagation delay contribution to a round-trip delay on a radio interface between gNB and UE | 541.46 ms (worst case) | 270.73 ms | 25.77 ms | | 12.89 ms | |
| Minimum propagation delay contribution to a round-trip delay on a radio interface between gNB and UE | 477.48 ms | 238.74 ms | 8 ms | | 4 ms | |

A scheduling sequential relationship offset (K_offset) is introduced into the 3rd Generation Partnership Project (3rd Generation Partnership Project, 3GPP) to enhance a sequential relationship.

In an initial access stage, cell specific (cell specific) K_offset is used, and K_offset is indicated through a system message.

After the initial access stage, user equipment (User Equipment, UE) specific K_offset may be indicated and updated through a media access control control element (MAC Control Element, MAC CE), and the MAC CE provides one differential UE specific K_offset value. One complete UE specific K_offset value is equal to cell specific K_offset minus differential UE specific K_offset.

After the initial access stage, without indication and updating of K_offset, the cell specific K_offset in the system message continues to be used for enhancement of all the sequential relationships. The cell specific K_offset has a value range of 0 ms to 1023 ms. The UE specific K_offset has a value range of 0 ms to 63 ms.

A timing advance (Timing Advance, TA) applied by NTN UE is determined through the following formula (1):

$$T_{TA} = \left( N_{TA} + N_{TA,UE-specific} + N_{TA,common} + N_{TA,offset} \right) \times T_c \qquad (1)$$

In the formula, $N_{TA}$ is indicated and updated by a TA command field in msg2/msgB or a TA command in the MAC CE. For a physical random access channel (Physical Random Access Channel, PRACH), $N_{TA} = 0$.

$N_{TA,UE-specific}$ denotes a TA independently estimated and pre-compensated by the UE.

$N_{TA,common}$ denotes a public TA controlled and indicated by a network.

$N_{TA,offset}$ denotes one fixed timing offset, depends on a frequency band and LTE/NR coexistence, and is specified by network configuration or protocol.

$T_c$ denotes a basic time unit, and $T_c = 1/(\Delta f_{max} \cdot N_f)$, where $\Delta f_{max} = 480 \cdot 10^3 Hz$; and $N_f = 4096$.

$N_{TA,UE-specific}$ is calculated by the UE based on some auxiliary information, such as a position of the UE and an ephemeris of a service satellite.

The NTN UE at least supports calculation and pre-compensation of a Doppler frequency offset on a service link (service link) through the position of the UE and the ephemeris of the service satellite.

Related parameters of $N_{TA,common}$ and the ephemeris of the service satellite use identical validity duration (validity duration), are broadcast by a system message, and are indicated through 4 bits. Optional values include {5, 10, 15, 20, 25, 30, 35, 40, 45, 50, 55, 60, 120, 180, 240, 900 (for GEO)} in seconds.

Within validity duration, the UE assumes that the related parameters of $N_{TA,common}$ and the ephemeris of the service satellite are valid and are not updated. In a case that the related parameters of $N_{TA,common}$ and the ephemeris of the service satellite are unavailable within the validity duration, the UE assumes that uplink loss of synchronization occurs.

The validity duration starts from epoch time (epoch time) of auxiliary information (for example, the ephemeris of the service satellite). In a case that the epoch time is explicitly indicated through the system message, the epoch time is start time of a downlink (Downlink, DL) sub-frame. The DL sub-frame is indicated through a system frame number (System frame number, SFN) and a sub-frame number.

In a case that the system message does not explicitly indicate the epoch time, the epoch time may be implicitly determined through end time of a system information window (SI window) for transmitting an NTN-specific system information block (System Information Block, SIB). When the epoch time is indicated through dedicated signaling, the epoch time is start time of one DL sub-frame, and the DL sub-frame is indicated through an SFN and a sub-frame number.

RACH-less handover in NR is as follows:

The PUSCH in the RACH-less handover in NR may be pre-allocated grant (pre-allocated grant), configured grant type 1 (configured grant Type 1), or dynamically scheduled.

In the method for channel monitoring or receiving according to the embodiment of the present disclosure, the DMRS antenna port of the first channel and the target reference signal are quasi co-located (QCL). The first channel includes at least one of the RACH-less physical downlink control channel (PDCCH) or the RACH-less physical downlink shared channel (PDSCH). In the process of RACH-less handover of the terminal, the terminal may determine a transmission characteristic of the first channel in the QCL relationship based on the target reference signal, and then the terminal may monitor or receive the PDCCH and the PDSCH based on the transmission characteristic. In this way, improvement in reliability of downlink control and a data channel is facilitated, and a success rate of the RACH-less handover is improved.

The method for channel monitoring or receiving according to the embodiments of the present disclosure will be described in detail below through some embodiments and their application scenes with reference to the accompanying drawings.

FIG. 2 is a schematic flowchart of a method for channel monitoring or receiving according to an embodiment of the present disclosure. As shown in FIG. 2, the method includes step 201.

Step 201, a terminal monitors or receives a first channel based on a target reference signal in a process of random access channel-less (RACH-less) handover of the terminal. A demodulation reference signal (DMRS) antenna port of the first channel and the target reference signal are quasi co-located (QCL). The first channel includes at least one of the following: an RACH-less physical downlink control channel (PDCCH); and an RACH-less physical downlink shared channel (PDSCH).

It may be understood that the RACH-less PDCCH is a PDCCH in RACH-less handover of the terminal, and the RACH-less PDSCH is a PDSCH in RACH-less handover of the terminal.

It should be noted that the embodiment of the present disclosure may be applied to a scene of RACH-less handover of the terminal. The terminal includes, but is not limited to, the listed types of the terminal 11.

In the process of RACH-less handover, the terminal does not perform RACH transmission in a target cell and corresponding reference signal selection, and some transmission characteristics, such as measurement information, a spatial relationship or a beam relationship, cannot be well mapped or inferred. This leads to low reliability of downlink control and a data channel and a low success rate of RACH-less handover.

Thus, to improve reliability of downlink control and a data channel and further improve a success rate of RACH-less handover, the embodiment of the present disclosure provides a QCL assumption for PDCCH and PDSCH transmission. In this way, the terminal may monitor or receive the first channel based on the target reference signal and the QCL relationship in the process of RACH-less handover.

That is, the DMRS antenna port of at least one of the RACH-less PDCCH and the RACH-less PDSCH and the target reference signal are quasi co-located (QCL). Based on the target reference signal and the QCL relationship, the terminal may monitor or receive the RACH-less PDCCH and the RACH-less PDSCH.

For example, the terminal determines the corresponding transmission characteristic (such as a beam, or a spatial receiving parameter) based on the target reference signal quasi co-located (QCL) with the RACH-less PDCCH and the RACH-less PDSCH, and monitors or receives the RACH-less PDCCH and the RACH-less PDSCH. That is, based on the transmission characteristic associated with the target reference signal and the QCL relationship, the corresponding transmission characteristics of the RACH-less PDCCH and the RACH-less PDSCH may be inferred, and further monitoring or receiving is performed.

Optionally, the terminal obtains the QCL relationship in various modes, which may be pre-defined by a protocol, pre-allocated, or indicated by the network side device for example.

In the embodiment of the present disclosure, the DMRS antenna port of the first channel and the target reference signal are quasi co-located (QCL). The first channel includes at least one of the RACH-less PDCCH or the RACH-less PDSCH. In the process of RACH-less handover of the terminal, the terminal may determine a transmission characteristic of the first channel in the QCL relationship based on the target reference signal, and then the terminal may monitor or receive the PDCCH and the PDSCH based on the transmission characteristic. In this way, improvement in reliability of downlink control and a data channel is facilitated, and a success rate of the RACH-less handover is improved.

Optionally, the QCL relationship includes at least one of the following:

a) an average gain (average gain); and
b) a QCL relationship of a type A (quasi co-location 'typeA').

Specifically, the QCL relationship of the type A includes at least one of Doppler shift (Doppler shift), Doppler spread (Doppler spread), average delay (average delay), and delay spread (delay spread).

For example, in a case that the QCL relationship between the DMRS antenna port of the first channel and the target reference signal is the QCL relationship of the type A, the terminal determines at least one of Doppler shift, Doppler spread, average delay and delay spread of the target reference signal, which may be applied to the DMRS antenna port of the first channel for channel estimation.

The QCL relationship further includes c) a QCL relationship of a type D (quasi co-location 'typeD').

Specifically, the QCL relationship of the type D includes a spatial receiving parameter (Spatial Rx parameter).

For example, in a case that the QCL relationship of the type D exists between the DMRS antenna port of the first channel and the target reference signal, the terminal may monitor or receive a signal on the DMRS antenna port of the first channel through a spatial receiving parameter/beam identical to the target reference signal.

Optionally, the target reference signal includes at least one of the following:

1) a synchronization signal block (Synchronization Signal Block, SSB) or a channel state information reference signal (CSI Reference Signal, CSI-RS) associated with an RACH-less PUSCH.

Optionally, the SSB or the CSI-RS associated with the RACH-less PUSCH is determined based on any one of the following options:

Option 1, in a case that the RACH-less PUSCH is a pre-allocated PUSCH or a type 1 configured grant PUSCH, the SSB or the CSI-RS associated with the RACH-less PUSCH is determined based on a mapping relationship between a PUSCH resource and an SSB or a CSI-RS.

That is, in a case that PUSCH transmission of RACH-less handover is pre-allocated grant or configured grant type 1, the SSB or the CSI-RS associated with the PUSCH is determined through the mapping (mapping) relationship between the PUSCH resource and the SSB or the CSI-RS.

Option 2, in a case that the RACH-less PUSCH is dynamically scheduled, the SSB or the CSI-RS associated with the RACH-less PUSCH is determined based on downlink control information (Downlink Control Information, DCI) used for scheduling the RACH-less PUSCH.

That is, in a case that the PUSCH transmission of RACH-less handover is dynamically scheduled, the SSB or the CSI-RS associated with the PUSCH is specified through the DCI used for scheduling the PUSCH.

2) a target SSB or a target CSI-RS in a source cell before the terminal performs RACH-less handover.

Optionally, the target SSB or the target CSI-RS includes at least one of the following:

a) an SSB or a CSI-RS last received by the terminal in the source cell;
b) the SSB or the CSI-RS, associated with the RACH-less PUSCH scheduled by the PDCCH, received by the terminal in the source cell; and
c) an SSB or a CSI-RS associated with a handover command received by the terminal in the source cell.

In the implementation, an association between the SSB or the CSI-RS and resources of the DMRS antenna port of the RACH-less PDCCH and the RACH-less PDSCH is established, thus facilitating improvement in reliability of downlink control and a data channel and further improvement in a success rate of RACH-less handover.

Optionally, the first channel is monitored or received based on the target reference signal. Based on this, a transmission characteristic used by transmission of a physical uplink control channel (Physical Uplink Control Channel, PUCCH) used for feeding back a receiving condition of the RACH-less PDSCH further needs to be determined, such that a beamforming gain (beamforming gain) for uplink transmission can be improved, and further improvement in a success rate of RACH-less handover can be facilitated. The transmission characteristic is a beam/spatial receiving parameter for example. Specifically, implementation may be performed through the following step:

The terminal determines a transmission characteristic of a PUCCH used for transmitting RACH-less PDSCH hybrid automatic repeat request (Hybrid Automatic Repeat Request, HARQ) feedback based on a target transmission characteristic.

The target transmission characteristic includes any one of the following:

a) an uplink transmission characteristic used by the RACH-less PUSCH, where
for example, an uplink beam used by the RACH-less PUSCH may be used as a beam of the PUCCH;
b) an uplink transmission characteristic used by last transmission of the RACH-less PUSCH, where
for example, an uplink beam used by the last transmission of the RACH-less PUSCH may be used as a beam of the PUCCH; and
c) a transmission characteristic indicated by a network side device, where
for example, a beam is indicated in the handover command as a beam of the PUCCH.

It should be noted that the target transmission characteristic is determined based on the QCL relationship.

In the implementation, for PUCCH transmission, an association relationship is established between a PUCCH transmission characteristic and a transmission characteristic used by a configure grant (configure grant, CG) and/or a dynamic grant (dynamic grant, DG) PUSCH in RACH-less, such that the beamforming gain for uplink transmission can be improved.

Optionally, in a case that the RACH-less PUSCH is DG, it is necessary to limit a DCI format and a search space (search space) used by the RACH-less PDCCH. In this way, terminal complexity is reduced, reliability of the RACH-less PDCCH is improved, and further a success rate of RACH-less handover is improved. Specifically, implementation may be performed through the following step:

The terminal determines a search space of the PDCCH used for scheduling the RACH-less PUSCH based on a target search space. The target search space includes any one of the following search spaces:

a) a common search space.
Optionally, the common search space includes a type 1-PDCCH common search space set (Type1-PDCCH CSS set) of a target cell. The Type1-PDCCH CSS set is indicated by a high-level parameter ra-SearchSpace.
b) a search space indicated by the network side device.

For example, the search space indicated by the network side device may be a type 1B PDCCH common search space set (Type1B-PDCCH CSS set) configured by the network side device. In a PDCCH-ConfigCommon parameter of the Type1B-PDCCH CSS set, rachless-SearchSpace is configured. A DCI format (format) corresponding to the rachless-SearchSpace is scrambled through a cell radio network temporary identifier (Cell Radio Network Temporary Identifier, C-RNTI) or a configured scheduling RNTI (Configured Scheduling RNTI, CS-RNTI). Specifically, indication may be performed through the following mode:

Type1B-PDCCH CSS set, rachless-SearchSpace in PDCCH-ConfigCommon for a DCI format with CRC scrambled by a C-RNTI or a CS-RNTI.

Optionally, in a case that the network side device does not configure rachless-SearchSpace, and does not provide at least one of a Type3-PDCCH CSS set, a Type1A-PDCCH CSS set, and a user equipment-specific search space set (UE-specific search space set, USS set), the terminal may monitor (monitor) the C-RNTI or the CS-RNTI in raSearchSpace.

In the implementation, the search space of the PDCCH used for scheduling the RACH-less PUSCH is determined, such that terminal complexity can be reduced, reliability of the RACH-less PDCCH can be improved, and further a success rate of RACH-less handover can be improved.

Optionally, the terminal further needs to execute the following step:

The terminal schedules the RACH-less PUSCH through a target DCI format.

The target DCI format includes any one of the following DCI formats:

a) DCI format 0_0, that is, fallback (fallback) DCI; and
b) a DCI format specified in a protocol or indicated by the network side device.

Optionally, in a case that the first channel is a PDCCH, PDCCH transmission includes any one of the following:

a) PDCCH repetition (repetition) transmission; and
b) PDCCH group (group) transmission.

In the embodiment of the present disclosure, in NR RACH-less handover, a PDCCH repetition and an association of the SSB and the CSI-RS with a PDCCH repetition are introduced.

For example, user equipment (UE) chooses to receive a corresponding PDCCH repetition based on an optimal SSB on the target cell, or the UE receives all different PDCCH repetitions.

As a sub-embodiment of the embodiments, time-domain resource allocation of a PUSCH scheduled by a PDCCH repetition uses a slot in which a last PDCCH repetition is located as reference time, and further a time-domain resource corresponding to PUSCH transmission is determined.

In the embodiment of the present disclosure, in NR RACH-less handover, a PDCCH grouping and an association of the SSB and the CSI-RS with a PDCCH group are introduced.

The PDCCH grouping herein may be a group of PDCCH monitoring occasions, or multiple PDCCH transmissions corresponding to the PDCCH grouping.

In the implementation, the DCI format of the PDCCH used for scheduling the RACH-less PUSCH is limited, such that a blind detection frequency can be reduced, terminal complexity can be reduced, reliability of the RACH-less PDCCH can be improved, and further a success rate of RACH-less handover can be improved.

The method for channel monitoring or receiving according to the embodiments of the present disclosure will be further described below.

Optionally, in a process of NR RACH-less handover of the terminal, the antenna port receiving the DMRS associated with the PDCCH and/or the PDSCH and the SSB or CSI-RS associated with the PUSCH in the NR RACH-less handover have QCL relationships of one or more meanings:

1) an average gain;
2) a QCL relationship of a type A; and
3) a QCL relationship of a type D.

In the embodiment, the QCL relationship is applicable to one or more of the following cases:

[1] In a case that PUSCH transmission of RACH-less handover is pre-allocated grant, the SSB or the CSI-RS associated with the PUSCH is determined through the mapping relationship between the PUSCH resource and the SSB or the CSI-RS.
[2] In a case that the PUSCH transmission of RACH-less handover is dynamically scheduled, the SSB or the CSI-RS associated with the PUSCH is specified through the DCI used for scheduling the PUSCH.

Optionally, in a process of NR RACH-less handover of the terminal, the antenna port receiving the DMRS associated with the PDCCH and/or the PDSCH and an SSB or a CSI-RS in a source cell before NR RACH-less handover have QCL relationships of one or more meanings:

1) an average gain;
2) a QCL relationship of a type A; and
3) a QCL relationship of a type D.

An SSB or a CSI-RS in the embodiments may be one or more of the following:

[1] an SSB or a CSI-RS last received by UE in the source cell;
[2] the SSB or the CSI-RS, associated with the RACH-less PUSCH scheduled by the PDCCH, received by the UE in the source cell; and
[3] an SSB or a CSI-RS associated with a handover command received by the UE in the source cell.

Optionally, a beam, used by the PUCCH for feeding back a receiving condition of the PDSCH, sent by the UE may be determined through one or more of the following methods:

1) the beam is an uplink beam used by the PUSCH of RACH-less handover;
2) the beam is an uplink beam used by last transmission of the PUSCH of RACH-less handover; and
3) the beam is indicated by a network, and for example, a handover command.

Optionally, a search space of a PDCCH used for scheduling the RACH-less PUSCH may be determined through one or more of the following methods:

1) an existing common search space is used, and
for example, Type1-PDCCH CSS set ra-SearchSpace of the target cell is used; and
2) the network side device is additionally provided with one search space, and for example,
a network configures one Type1B-PDCCH CSS set and rachless-SearchSpace in PDCCH-ConfigCommon for a DCI format with CRC scrambled by a C-RNTI or a CS-RNTI.

Optionally, in a case that the rachless-SearchSpace is not configured and a Type3-PDCCH CSS set, a Type1A-PDCCH CSS set or a USS set is not provided, the UE may monitor the C-RNTI/CS-RNTI in the raSearchSpace.

Optionally, the DCI format of the PDCCH used for scheduling the RACH-less PUSCH may be determined through one or more of the following methods:

1) only DCI format 0_0 is used, that is, fallback DCI is used;
2) one new DCI format is introduced.

In the method for channel monitoring or receiving according to the embodiment of the present disclosure, in NR RACH-less handover, a QCL relationship between an SSB or a CSI-RS and a DMRS antenna port resource of a PDCCH or a PDSCH is established, facilitating improvement in reliability of downlink control and a data channel. In addition, for PUCCH transmission, an association between a PUCCH beam and a beam used by a CG and/or DG PUSCH in RACH-less is established, to improve a beamforming gain for uplink transmission. Meanwhile, in a case that a RACH-less PUSCH is DG, a DCI format and a search space used by a corresponding PDCCH are limited, thus reducing UE complexity, improving reliability of the PDCCH, and improving a success rate of RACH-less handover.

An execution body of the method for channel monitoring or receiving according to the embodiment of the present disclosure may be an apparatus for channel monitoring or receiving. In the embodiment of the present disclosure, the apparatus for channel monitoring or receiving according to the embodiment of the present disclosure is illustrated with a case of executing the method for channel monitoring or receiving through the apparatus for channel monitoring or receiving as an example.

FIG. 3 is a schematic structural diagram of an apparatus for channel monitoring or receiving according to an embodiment of the present disclosure. As shown in FIG. 3, the apparatus 300 for channel monitoring or receiving includes: a monitoring or receiving module 301 configured to monitor or receive a first channel based on a target reference signal in a process of random access channel-less (RACH-less) handover of a terminal. The demodulation reference signal (DMRS) antenna port of the first channel and the target reference signal are quasi co-located (QCL).

The first channel includes at least one of the following:

an RACH-less physical downlink control channel (PDCCH); and
an RACH-less physical downlink shared channel (PDSCH).

In the apparatus for channel monitoring or receiving according to the embodiment of the present disclosure, the DMRS antenna port of the first channel and the target reference signal are quasi co-located (QCL). The first channel includes at least one of the RACH-less PDCCH or the RACH-less PDSCH. In the process of RACH-less handover of the terminal, the terminal may determine a transmission characteristic of the first channel in the QCL relationship based on the target reference signal, and then may monitor or receive the PDCCH and/or the PDSCH based on the transmission characteristic. In this way, improvement in reliability of downlink control and a data channel is facilitated, and a success rate of the RACH-less handover is improved.

Optionally, the target reference signal includes at least one of the following:

a synchronization signal block (SSB) or a channel state information reference signal (CSI-RS) associated with an RACH-less physical uplink shared channel (PUSCH); and
a target SSB or a target CSI-RS in a source cell before the terminal performs RACH-less handover.

Optionally, the SSB or the CSI-RS associated with the RACH-less PUSCH is determined based on any one of the following modes:

in a case that the RACH-less PUSCH is a pre-allocated PUSCH or a type 1 configured grant PUSCH, the SSB or the CSI-RS associated with the RACH-less PUSCH is determined based on a mapping relationship between a PUSCH resource and an SSB or a CSI-RS; and
in a case that the RACH-less PUSCH is dynamically scheduled, the SSB or the CSI-RS associated with the RACH-less PUSCH is determined based on downlink control information (DCI) used for scheduling the RACH-less PUSCH.

Optionally, the target SSB or the target CSI-RS includes at least one of the following:

an SSB or a CSI-RS last received by the terminal in the source cell;
the SSB or the CSI-RS, associated with the RACH-less PUSCH scheduled by the PDCCH, received by the terminal in the source cell; and
an SSB or a CSI-RS associated with a handover command received by the terminal in the source cell.

Optionally, the QCL relationship includes at least one of the following:

an average gain;
a QCL relationship of a type A; and
a QCL relationship of a type D.

Optionally, the apparatus further includes:
a first determination module configured to determine a transmission characteristic of a physical uplink control channel (PUCCH) used for transmitting RACH-less PDSCH hybrid automatic repeat request (HARQ) feedback based on a target transmission characteristic.

The target transmission characteristic includes any one of the following:

an uplink transmission characteristic used by the RACH-less PUSCH;

an uplink transmission characteristic used by last transmission of the RACH-less PUSCH; and

a transmission characteristic indicated by a network side device.

Optionally, the apparatus further includes:

a second determination module configured to determine a search space of the PDCCH used for scheduling the RACH-less PUSCH based on a target search space.

The target search space includes any one of the following search spaces:

a common search space; and

a search space indicated by the network side device.

Optionally, the common search space includes a type 1-PDCCH common search space set (Type1-PDCCH CSS set) of a target cell.

Optionally, the apparatus further includes:

a scheduling module configured to schedule the RACH-less PUSCH through a target DCI format.

The target DCI format includes any one of the following DCI formats:

DCI format 0_0; and

a DCI format specified in a protocol or indicated by the network side device.

Optionally, in a case that the first channel is a PDCCH, PDCCH transmission includes any one of the following:

PDCCH repetition transmission; and

PDCCH group transmission.

The apparatus for channel monitoring or receiving in the embodiment of the present disclosure may be an electronic device, such as an electronic device having an operating system, or may be a component in an electronic device, such as an integrated circuit or chip. The electronic device may be a terminal, or may be another device except a terminal. For example, the terminal may include, but is not limited to, types of the terminal 11 listed above. Another device may be a server, a network attached storage (Network Attached Storage, NAS), etc., and is not specifically limited by the embodiments of the present disclosure.

The apparatus for channel monitoring or receiving according to the embodiment of the present disclosure can implement all processes implemented in the embodiment of the method in FIG. 2, and achieve identical technical effects. To avoid repetition, details will not be repeated herein.

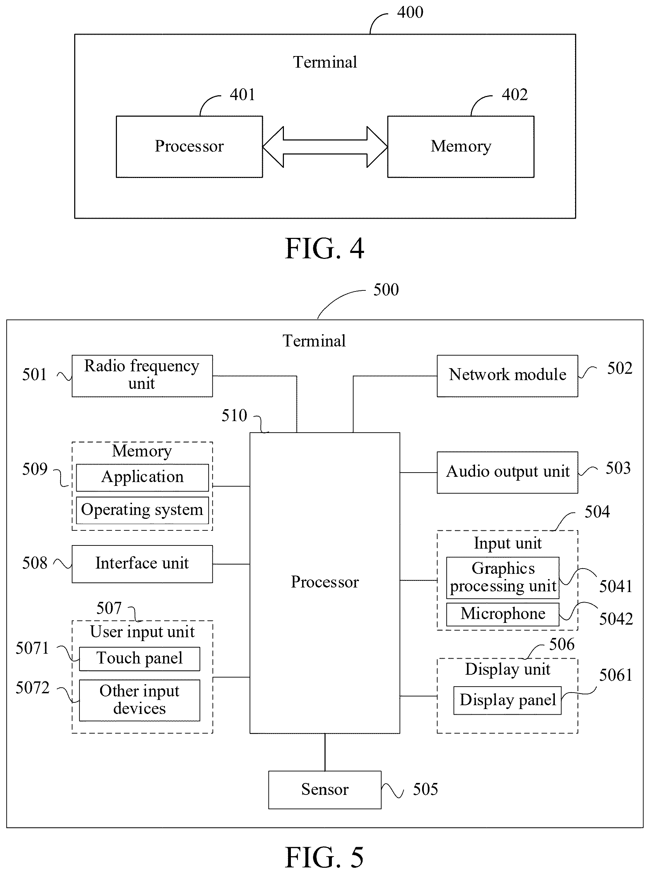

FIG. 4 is a first schematic diagram of a hardware structure of a terminal according to an embodiment of the present disclosure. The terminal 400 includes a processor 401 and a memory 402. The memory 402 stores a program or an instruction runnable on the processor 401. For example, in a case that the program or the instruction is executed by the processor 401, all steps of the embodiments of the method for channel monitoring or receiving as shown in FIG. 2 are implemented, and identical technical effects can be achieved.

An embodiment of the present disclosure further provides a terminal. The terminal includes a processor and a communication interface. The communication interface is coupled to the processor. The processor is configured to run a program or an instruction, such that steps in the embodiment of the method for channel monitoring or receiving as shown in FIG. 2 are implemented. The embodiment of the terminal corresponds to the embodiment of the method at a terminal side. All implementation processes and implementations of the method embodiment may be applied to the embodiment of the terminal, and can achieve identical technical effects. Specifically, FIG. 5 is a second schematic diagram of a hardware structure of a terminal according to an embodiment of the present disclosure.

The terminal 500 includes, but is not limited to, at least some of components such as a radio frequency unit 501, a network module 502, an audio output unit 503, an input unit 504, a sensor 505, a display unit 506, a user input unit 507, an interface unit 508, a memory 509, and a processor 510.

Those skilled in the art can understand that the terminal 500 may further include a power supply (for example, a battery) configured to supply power to all components, and the power supply may be logically connected to the processor 510 through a power management system, such that functions such as charging, discharging and power consumption management are achieved through the power management system. A terminal structure shown in FIG. 5 does not limit the terminal. The terminal may include more or fewer components than those shown in the figure, combine some components, or have different component arrangements, which will not be repeated herein.

It should be understood that, in the embodiment of the present disclosure, the input unit 504 may include a graphics processing unit (Graphics Processing Unit, GPU) 5041 and a microphone 5042. The graphics processing unit 5041 is configured to process image data of a static picture or a video obtained by an image capture apparatus (for example, a camera) in a video capture mode or an image capture mode. The display unit 506 may include a display panel 5061. The display panel 5061 may be configured in a form of a liquid crystal display, an organic light-emitting diode, etc. The user input unit 507 includes a touch panel 5071 and at least one of other input devices 5072. The touch panel 5071 is also referred to as a touchscreen. The touch panel 5071 may include two parts of a touch sensing apparatus and a touch controller. The other input devices 5072 may include, but are not limited to, a physical keyboard, a functional key (for example, a volume control key or a switch key), a track ball, a mouse, and a joystick, and will not be repeated herein.

In the embodiment of the present disclosure, after the radio frequency unit 501 receives downlink data from the network side device, the data may be transmitted to the processor 510 for processing. In addition, the radio frequency unit 501 may send uplink data to the network side device. Generally, the radio frequency unit 501 includes, but is not limited to, an antenna, an amplifier, a transceiver, a coupler, a low noise amplifier, a duplexer, etc.

The memory 509 may be configured to store a software program or an instruction and various data. The memory 509 may mainly include a first storage zone used for storing the program or the instruction and a second storage zone used for storing data. The first storage zone may store an operating system, an application or an instruction required by at least one function (for example, a sound playback function and an image display function), etc. In addition, the memory 509 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 509 in the embodiment of the present disclosure includes, but is not limited to, the memories and any other suitable types of memories.

The processor 510 may include one or more processing units. Optionally, the processor 510 integrates an application processor and a modem processor. The application processor is mainly configured to process operations relating to an operating system, a user interface, an application, etc. The modem processor, such as a baseband processor, is mainly configured to process a radio communication signal. It may be understood that the modem processor may alternatively not be integrated into the processor 510.

It may be understood that, reference may be made to related description of the embodiment of the method for channel monitoring or receiving as shown in FIG. 2 for an implementation process of each implementation involved in the embodiment, and identical or corresponding technical effects are achieved. To avoid repetition, details will not be repeated herein.

An embodiment of the present disclosure further provides a readable storage medium. The readable storage medium stores a program or an instruction. In a case that the program or the instruction is executed by a processor, all processes of the embodiment of the method for channel monitoring or receiving as shown in FIG. 2 are implemented, and identical technical effects can be achieved. To avoid repetition, details will not be repeated herein.

The processor is a processor of the terminal of the embodiment. The readable storage medium includes a computer-readable storage medium, such as a computer read-only memory (ROM), a random access memory (RAM), a magnetic disk, or an optical disk. In some examples, the readable storage medium may be a non-transitory readable storage medium.

An embodiment of the present disclosure further provides a chip. The chip includes a processor and a communication interface. The communication interface is coupled to the processor. The processor is configured to run a program or an instruction, such that all processes of the embodiment of the method for channel monitoring or receiving as shown in FIG. 2 are implemented, and identical technical effects can be achieved. To avoid repetition, details will not be repeated herein.

It should be understood that the chip mentioned in the embodiment of the present disclosure may alternatively be referred to as a system on a chip, a system chip, a chip system, a system-on-chip, etc.

An embodiment of the present disclosure further provides a computer program/program product. The computer program/program product is stored in a storage medium. The computer program/program product is executed by at least one processor, such that all processes of the embodiment of the method for channel monitoring or receiving as shown in FIG. 2 are implemented, and identical technical effects can be achieved. To avoid repetition, details will not be repeated herein.

It should be noted that terms "include", "comprise", "involve", or their any other variations herein are intended to cover non-exclusive inclusions, such that a process, a method, an article, or an apparatus including a series of elements not only includes those elements, but also includes other elements that are not explicitly listed, or includes inherent elements of the process, the method, the article, or the apparatus. Without more limitations, the elements defined by the sentence "include a ..." or "comprise a ..." do not exclude existence of other identical elements in the process, the method, the article, or the apparatus including the elements. In addition, it should be noted that a range of the method and the apparatus in an implementation of the present disclosure is not limited to execution of functions in order shown or discussed, and may further include execution of functions involved in a substantially simultaneous manner or in reverse order. For example, the method described may be executed in order different from that described, and various steps may be added, omitted, or combined. Moreover, the features described with reference to some examples may be combined in other examples.

From the description of the above implementations, those skilled in the art may clearly understand that the method of the embodiment may be implemented through a computer software product plus a necessary general-purpose hardware platform, or certainly may be implemented through hardware. The computer software product is stored in a storage medium (for example, an ROM, an RAM, a magnetic disk, an optical disk, etc.), and includes a plurality of instructions, to enable the terminal or the network side device to execute the method according to all the embodiments of the present disclosure.

The embodiments of the present disclosure are described above with reference to the accompanying drawings, and the present disclosure is not limited to the specific implementations. The specific implementations are merely illustrative rather than limitative. Inspired by the present disclosure, those of ordinary skill in the art may still make implementations in many forms without departing from the essence of the present disclosure and the protection scope of the claims, which all fall within the protection scope of the present disclosure.

**Claims**

1. A method for channel monitoring or receiving, comprising:

    monitoring or receiving, by a terminal, a first channel based on a target reference signal in a process of random access channel-less (RACH-less) handover of the terminal, wherein a demodulation reference signal (DMRS) antenna port of the first channel and the target reference signal are quasi co-located (QCL); and
    the first channel comprises at least one of the following:

        an RACH-less physical downlink control channel (PDCCH); and
        an RACH-less physical downlink shared channel (PDSCH).

2. The method according to claim 1, wherein the target reference signal comprises at least one of the following:

    a synchronization signal block (SSB) or a channel state information reference signal (CSI-RS) associated with an RACH-less physical uplink shared channel (PUSCH); and
    a target SSB or a target CSI-RS in a source cell before the terminal performs RACH-less handover.

3. The method according to claim 2, wherein the SSB or the CSI-RS associated with the RACH-less PUSCH is determined based on any one of the following modes:

    determining, in a case that the RACH-less PUSCH is a pre-allocated PUSCH or a type 1 configured grant PUSCH, the SSB or the CSI-RS associated with the RACH-less PUSCH based on a mapping relationship between a PUSCH resource and an SSB or a CSI-RS; and
    determining, in a case that the RACH-less PUSCH is dynamically scheduled, the SSB or the CSI-RS associated with the RACH-less PUSCH based on downlink control information (DCI) used for scheduling the RACH-less PUSCH.

4. The method according to claim 2, wherein the target SSB or the target CSI-RS comprises at least one of the following:

    an SSB or a CSI-RS last received by the terminal in the source cell;
    the SSB or the CSI-RS, associated with the RACH-less PUSCH scheduled by the PDCCH, received by the terminal in the source cell; and

an SSB or a CSI-RS associated with a handover command received by the terminal in the source cell.

5. The method according to any one of claims 1 to 4, wherein the QCL relationship comprises at least one of the following:

an average gain;
a QCL relationship of a type A; and
a QCL relationship of a type D.

6. The method according to any one of claims 1 to 5, further comprising:

determining, by the terminal, a transmission characteristic of a physical uplink control channel (PUCCH) used for transmitting RACH-less PDSCH hybrid automatic repeat request (HARQ) feedback based on a target transmission characteristic, wherein
the target transmission characteristic comprises any one of the following:

an uplink transmission characteristic used by the RACH-less PUSCH;
an uplink transmission characteristic used by last transmission of the RACH-less PUSCH; and
a transmission characteristic indicated by a network side device.

7. The method according to any one of claims 1 to 6, further comprising:

determining, by the terminal, a search space of the PDCCH used for scheduling the RACH-less PUSCH based on a target search space, wherein
the target search space comprises any one of the following search spaces:

a common search space; and
a search space indicated by the network side device.

8. The method according to claim 7, wherein the common search space comprises a type 1-PDCCH common search space set (Type1-PDCCH CSS set) of a target cell.

9. The method according to any one of claims 1 to 8, further comprising:

scheduling, by the terminal, the RACH-less PUSCH through a target DCI format, wherein
the target DCI format comprises any one of the following DCI formats:

DCI format 0_0; and
a DCI format specified in a protocol or indicated by the network side device.

10. The method according to any one of claims 1 to 9, wherein in a case that the first channel is a PDCCH, PDCCH transmission comprises any one of the following:

PDCCH repetition transmission; and
PDCCH group transmission.

11. An apparatus for channel monitoring or receiving, comprising:

a monitoring or receiving module configured to monitor or receive a first channel based on a target reference signal in a process of random access channel-less (RACH-less) handover of a terminal, wherein a demodulation reference signal (DMRS) antenna port of the first channel and the target reference signal are quasi co-located (QCL); and
the first channel comprises at least one of the following:

an RACH-less physical downlink control channel (PDCCH); and
an RACH-less physical downlink shared channel (PDSCH).

12. A terminal, comprising a processor and a memory, wherein the memory stores a program or an instruction runnable on the processor, and when the program or the instruction is executed by the processor, steps of the method for channel monitoring or receiving according to any one of claims 1 to 10 are implemented.

13. A readable storage medium, storing a program or an instruction, wherein when the program or the instruction is executed by a processor, steps of the method for channel monitoring or receiving according to any one of claims 1 to 10 are implemented.

14. A terminal, configured to execute steps of the method for channel monitoring or receiving according to any one of claims 1 to 10.

15. A computer program/program product, stored in a storage medium, wherein the computer program/program product is executed by at least one processor, such that steps of the method for channel monitoring or receiving according to any one of claims 1 to 10 are implemented.

16. A chip, comprising a processor and a communication interface, wherein the communication interface is coupled to the processor, and the processor is configured to run a program or an instruction, such that steps of the method for channel monitoring or receiving according to any one of claims 1 to 10 are implemented.

Network side
device

11    11

Terminal

Terminal

FIG. 1

Monitor or receive, by a terminal, a first channel based on a target reference signal
in a process of random access channel-less (RACH-less) handover of the terminal,
where a demodulation reference signal (DMRS) antenna port of the first channel
and the target reference signal are quasi co-located (QCL), and the first channel
includes at least one of the following: an RACH-less physical downlink control
channel (PDCCH); and an RACH-less physical downlink shared channel
(PDSCH)

201

FIG. 2

300

Apparatus for channel
monitoring or receiving

Monitoring or receiving module

301

FIG. 3

400

Terminal

401

Processor

402

Memory

## FIG. 4

500

Terminal

501 — Radio frequency unit

502 — Network module

510

509 — Memory
- Application
- Operating system

503 — Audio output unit

504 — Input unit
- Graphics processing unit — 5041
- Microphone — 5042

508 — Interface unit

Processor

507 — User input unit
- 5071 — Touch panel
- 5072 — Other input devices

506 — Display unit
- Display panel — 5061

Sensor — 505

## FIG. 5

## INTERNATIONAL SEARCH REPORT

| International application No. |
| --- |
| **PCT/CN2024/092777** |

**A.    CLASSIFICATION OF SUBJECT MATTER**

H04W74/00(2009.01)i

According to International Patent Classification (IPC) or to both national classification and IPC

**B.    FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, ENTXTC, 3GPP: 随机接入, 无, 跳过, 准共址, 准关联, 准协同, RACH, less, skip, PDCCH, PDSCH, DMRS, CSI-RS, SSB, QCL

**C.    DOCUMENTS CONSIDERED TO BE RELEVANT**

| Category* | Citation of document, with indication, where appropriate, of the relevant passages | Relevant to claim No. |
| --- | --- | --- |
| X | US 2022191748 A1 (NOKIA TECHNOLOGIES OY) 16 June 2022 (2022-06-16) description, paragraphs 0011-0013, 0034-0038, and 0081 | 1-16 |
| A | CN 111278092 A (VIVO MOBILE COMMUNICATION CO., LTD.) 12 June 2020 (2020-06-12) entire document | 1-16 |
| A | CN 111600692 A (VIVO MOBILE COMMUNICATION CO., LTD.) 28 August 2020 (2020-08-28) entire document | 1-16 |
| A | CN 115968050 A (VIVO MOBILE COMMUNICATION CO., LTD.) 14 April 2023 (2023-04-14) entire document | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 July 2024** | **23 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/092777**

| Patent document cited in search report | | | Publication date (day/month/year) | Patent family member(s) | | | Publication date (day/month/year) |
|---|---|---|---|---|---|---|---|
| US | 2022191748 | A1 | 16 June 2022 | WO | 2022122300 | A1 | 16 June 2022 |
|    |            |    |              | EP | 4260607    | A1 | 18 October 2023 |
| CN | 111278092 | A | 12 June 2020 | KR | 20220002439 | A | 06 January 2022 |
|    |           |   |              | EP | 3962178 | A1 | 02 March 2022 |
|    |           |   |              | WO | 2020216293 | A1 | 29 October 2020 |
|    |           |   |              | US | 2022046541 | A1 | 10 February 2022 |
|    |           |   |              | JP | 2022530124 | A | 27 June 2022 |
|    |           |   |              | CN | 113365358 | A | 07 September 2021 |
| CN | 111600692 | A | 28 August 2020 | | None | | |
| CN | 115968050 | A | 14 April 2023 | WO | 2023056929 | A1 | 13 April 2023 |

Form PCT/ISA/210 (patent family annex) (July 2022)

**REFERENCES CITED IN THE DESCRIPTION**

**Patent documents cited in the description**

- CN 202310547636